# FASCICULE DE BREVET EUROPEEN

(11) **EP 1 565 666 B1**
(45) Date de publication et mention de la délivrance du brevet: **20.05.2009**
(21) Numéro de dépôt: 03776904.9
(22) Date de dépôt: 14.11.2003
(51) Int. Cl.: F16D 51/14

(54) **FREIN A TAMBOUR ET SEGMENT POUR UN TEL FREIN**
TROMMELBREMSE UND BREMSBACKE FÜR SOLCH EINE BREMSE
DRUM BRAKE AND BRAKE SHOE FOR ONE SUCH BRAKE

(30) Priorité: 22.11.2002 FR 0214781
(43) Date de publication de la demande: 24.08.2005
(73) Titulaire: ROBERT BOSCH GMBH, 70442 Stuttgart (DE)
(72) Inventeur: DUPUIS, Vincent, F-94300 Vincennes (FR)
(74) Mandataire: Hurwic, Aleksander Wiktor
(86) Numéro de dépôt international: PCT/EP2003/012752
(87) Numéro de publication internationale: WO 2004/048797

(56) Documents cités:
- DE-A- 19 906 798
- GB-A- 1 572 744
- US-A- 2 051 088
- US-A- 2 503 489
- PATENT ABSTRACTS OF JAPAN vol. 2002, no. 08, 5 août 2002 (2002-08-05) -& JP 2002 106611 A (SANYO KOGYO KK), 10 avril 2002 (2002-04-10)

## Description

L'invention est relative à un frein à tambour du genre de ceux qui comportent un plateau sur lequel est monté au moins un segment muni d'une garniture de friction, un moyen d'application du segment contre un tambour de roue en réponse à une commande de freinage transmise par un cylindre de roue, et des moyens élastiques de rappel du segment pour l'écarter du tambour lorsque le freinage cesse.

Les freins à tambour de type classique comportent une butée fixe ou mobile par rapport au plateau à laquelle est fixée une première extrémité du segment opposée à une deuxième extrémité en contact avec le cylindre de roue, le cylindre de roue transmettant la commande de freinage directement au segment montée en rotation par rapport au plateau à son extrémité fixée à la butée.

Les freins à tambour présentent plusieurs avantages sur les freins à disque. Pour une même force d'application, le couple de freinage est en général plus grand dans un frein à tambour que dans un frein à disque. La fonction "frein à main" est plus facile à installer sur un frein à tambour que sur un frein à disque. Aussi, les freins à tambour sont-ils toujours utilisés, notamment sur les roues arrière des véhicules.

Toutefois le remplacement d'un segment de frein à tambour, lorsque la garniture de friction est usée, nécessite une opération de démontage et remontage relativement longue. En outre, la stabilité du couple de freinage demande à être améliorée.

En effet, du fait de la répartition des efforts exercés dans le frein à tambour lors d'une action de freinage, il y a un phénomène d'enroulement du segment susceptible de réduire la stabilité du freinage et par conséquent du véhicule.

Lors d'une action de freinage, quatre efforts sont remarquables dans un frein à tambour, premièrement un effort d'entrée au niveau du contact entre le cylindre de roue et la première extrémité du segment, deuxièmement un effort d'application au contact de la garniture avec le tambour, troisièmement un effort de freinage au point de contact de la seconde extrémité du segment de la butée et quatrièmement un effort de réaction au point de contact de la seconde extrémité du segment et de la butée. Le fait que l'effort de freinage et l'effort de réaction s'appliquent en un même point favorise le phénomène d'enroulement du segment. Le document US 2051088 révèle le préambule de la revendication 1.

L'invention a pour but, surtout, de fournir un frein à tambour dans lequel l'opération de remplacement d'un segment est simplifiée, tandis que la stabilité du couple de freinage est améliorée. L'invention est definit par les charactéristiques de la revendication 1.

Selon l'invention, un frein à tambour du genre défini précédemment est caractérisé par le fait que le segment est monté coulissant suivant une direction essentiellement radiale entre deux parois de guidage solidaires du plateau, et que le moyen d'application du segment est en appui contre la paroi intérieure du segment du tambour, pour exercer un effort sensiblement radial.

Selon l'invention, on sépare l'effort de freinage de l'effort d'application.

Le remplacement d'un segment dont la garniture de friction est usée s'effectue aisément car le segment peut être démonté par une simple translation du segment, qui n'est pas lié au moyen d'application.

De préférence le frein comporte deux segments opposés suivant une direction diamétrale, montés coulissants suivant une direction essentiellement radiale entre deux parois de guidage et un moyen d'application pour chaque segment contre le tambour de roue en réponse à une commande de freinage, chaque moyen d'application étant en appui contre la paroi intérieure d'un segment.

L'étendue angulaire de chaque segment peut être inférieure à 60°.

Chaque segment comprend un support rigide, notamment métallique, et une garniture de friction fixée sur la surface extérieure du support . Les extrémités du support rigide forment des butées propres à s'appuyer dans le sens circonférentiel contre une paroi de guidage correspondante.

Le frein peut être prévu pour que l'axe de l'effort de réaction soit décalé par rapport à l'axe de l'effort d'entrée .

Le moyen d'application d'un segment peut comprendre un levier plat, en arc de courbe convexe vers l'extérieur, dont une extrémité est articulée sur un point fixe du plateau et dont l'autre extrémité est soumise à un effort de poussée, généralement exercé par un piston de cylindre de roue, dans un sens propre à appliquer le segment contre le tambour, le levier venant en appui par son bord radial extérieur contre la face interne du segment correspondant.

Le levier peut comporter sur son bord extérieur une partie en saillie formant une bosse qui assure l'appui contre la face interne du segment correspondant. De préférence, l'appui du levier contre la face interne du segment est situé environ à mi-distance des extrémités du levier. Le rapport de levier est avantageusement compris entre 2 et 3, limites incluses.

L'articulation du levier sur le plateau peut comporter sur le plateau une surface conjuguée d'une extrémité du levier pour la guider.

Les moyens élastiques de rappel peuvent comprendre un premier moyen élastique de rappel du levier et un deuxième moyen élastique de rappel du segment. Ce deuxième moyen élastique de rappel du segment peut comprendre, à chaque extrémité du segment, une agrafe élastique accrochée au plateau et propre à exercer un rappel du segment dans le sens radial vers l'intérieur.

La garniture de friction est collée sur le support rigide, avantageusement surmoulée.

Selon une variante de réalisation, le frein à tambour comporte un levier dont la partie centrale est munie d'une articulation pour un palonnier en arc de courbe concave vers l'extérieur, chacune des deux extrémités du palonnier étant en appui contre la face interne d'un segment. Le frein à tambour peut comporter deux leviers, deux palonniers et quatre segments, l'ensemble étant symétrique par rapport à un diamètre du plateau.

L'invention est également relative à un segment pour frein à tambour tel que défini précédemment, ce segment étant caractérisé par le fait qu'il comprend un support rigide de garniture de friction dont lés extrémités périphériques forment des butées propres à s'appuyer dans le sens circonférentiel contre des parois de guidage pour un montage coulissant suivant une direction essentiellement radiale, la garniture de friction étant fixée contre la surface extérieure du support.

L'invention est également relative à un frein à tambour comportant un sur lequel est monté au moins un segment muni d'une garniture de friction, un levier d'application du segment contre un tambour de roue en réponse à une commande de freinage, et des moyens élastiques de rappel du segment pour l'écarter du tambour lorsque le freinage cesse,
caractérisé par le fait que lors d'une application de freinage un effort de réaction s'applique au levier d'application et un effort de freinage s'applique au segment de manière à ce que lesdits efforts de freinage s'appliquent en deux points différents.

L'invention consiste, mises à part les dispositions exposées ci-dessus, en un certain nombre d'autres dispositions dont il sera plus explicitement question ci-après à propos d'exemples de réalisation décrits en détail avec référence aux dessins annexés, mais qui ne sont nullement limitatifs.

Sur ces dessins :
Fig.1a est une vue simplifiée en élévation, avec parties en extérieur et parties en coupe, d'un frein à tambour d'un type connu.
Fig 1b est une vue simplifiée en élévation, avec parties en extérieur et parties en coupe, d'un frein à tambour selon l'invention.
Fig.2 est une vue en perspective du frein extrait du tambour.
Fig.3 est une vue schématique partielle d'une variante de réalisation.
Fig.4 est une vue schématique partielle d'une variante de réalisation de l'articulation du levier.
Fig.5 est une vue schématique partielle d'une variante de réalisation de l'appui du levier contre le segment, et
Figs.6 à 8 sont des vues schématiques partielles d'autres variantes de réalisation de l'appui du levier contre le segment.

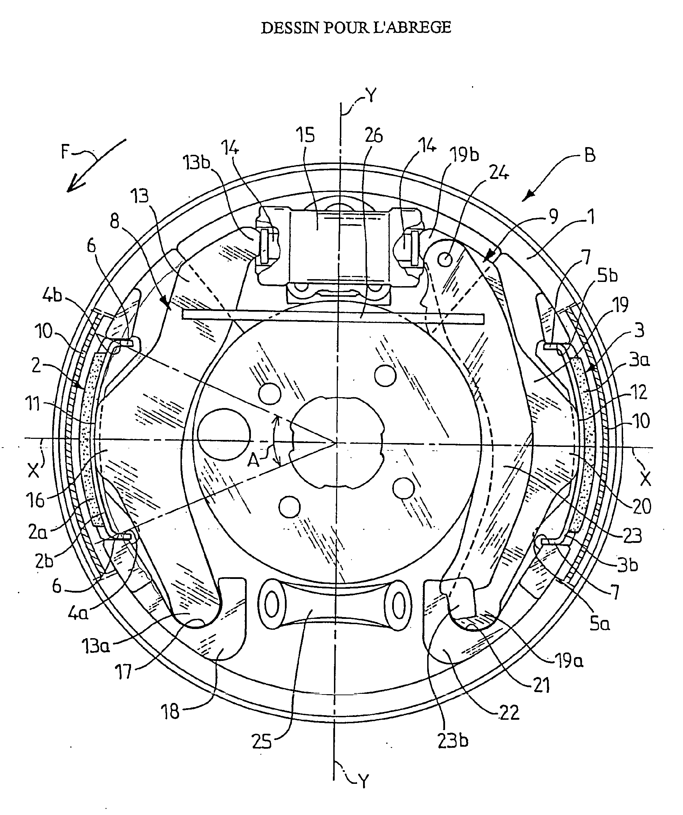

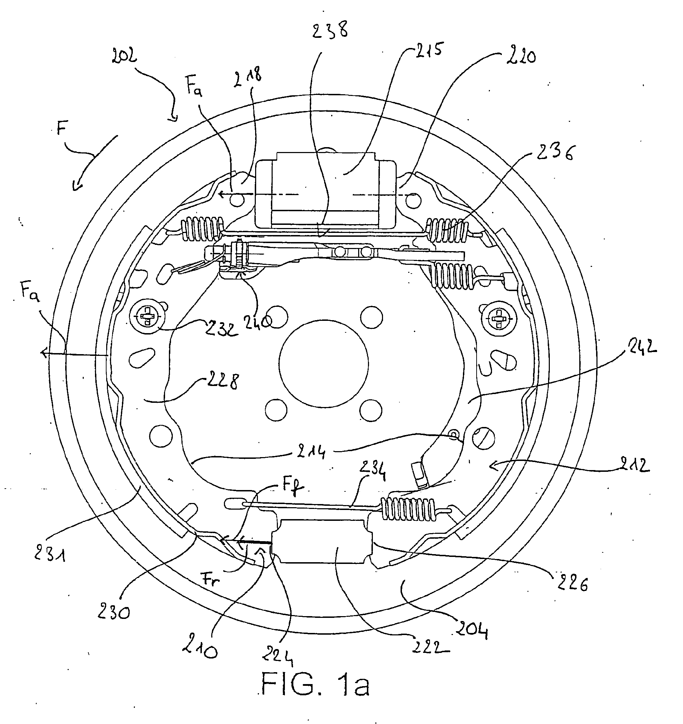

En se reportant à la Fig. 1a, on peut voir un frein à tambour 202 de type connu comportant un plateau 204 prévu pour être fixé à un bras de roue d'un véhicule, en forme de disque, un premier et un second segments 210, 212 sensiblement en forme d'arc de cercle montés sur le plateau, leurs parties convexes 214 vers l'extérieur du plateau et leurs parties concaves 216 se faisant face, un cylindre de roue 215 solidaire du plateau 204 disposé entre des premières extrémités 218, 220 respectives des premier et second segment 210, 212 et un moyen de butée 222 solidaire du plateau 204 disposé entre des secondes extrémités 224, 226 des premiers et second segments et un tambour non représenté solidaire de la roue et entourant avec jeu les parties convexes 214 des segments 210, 212.

Les premiers et seconds segments 210, 212 étant symétriques, nous ne décrirons que le premier segment en précisant ce qui lui est spécifique relativement au second segment 212.

Le premier segment 210 comporte une jante 228 en forme de croissant, une lame 230 soudée sur la partie radialement externe de la jante 228 perpendiculairement à un rayon du plateau 204 et une garniture 231 appliquée sur la partie radialement externe de la lame 230, la garniture étant susceptible de venir en contact avec le tambour lors d'une action de freinage.

Le premier segment 210 est maintenu latéralement au plateau par un ressort hélicoïdal 232 monté fixe par rapport au plateau 4 et perpendiculairement à celui-ci et traversant la jante 228, ladite jante étant pincée entre deux spires du ressort 232.

Les secondes extrémités 224, 226 des premier et second segments sont maintenus en appui contre le moyen de butée 222 par un moyen de liaison 234 des deux segments, le moyen de liaison 234 étant en partie formé par un ressort hélicoïdal.

Le frein à tambour 202 comporte également un moyen de rappel 236 des segments vers l'intérieur du plateau 204 et formé en parties par deux éléments élastiques, et une entretoise 238 disposée en dessous du cylindre de roue parallèlement à l'axe longitudinal X du cylindre de roue. L'entretoise comporte également des moyens 240 de rattrapage d'usure des garnitures de frein de type connu que nous ne décrirons pas dans le détail. L'entretoise 238 est maintenu au premier et second segments 210, 212 respectivement par des ressorts 241.

Le cylindre de roue est alimenté de manière connu par un circuit hydraulique par exemple comportant un maître-cylindre et un servomoteur d'assistance au freinage actionné par une pédale de frein (non représentés). Le cylindre de roue comporte un premier et un second pistons (non représentés) susceptibles de s'éloigner l'un de l'autre selon l'axe X sous l'action du fluide hydraulique sous pression, les pistons venant alors s'appliquer contre les premières extrémités 218, 220 des segments 210, 212 et repoussant ceux-ci vers l'extérieur.

Le frein à tambour comporte également un second actionneur comportant un levier de frein 242 de parc permettant une immobilisation du véhicule lorsque le véhicule automobile est en stationnement que nous ne décrirons pas en détail.

Lors d'une application de freinage, le tambour tournant le sens de la flèche F, on peut distinguer quatre efforts s'appliquant à chaque segment 210, 212. Nous allons décrire ces quatre forces s'appliquant au premier segment 210.

Un premier effort dit effort d'entrée Fe s'applique au niveau du contact entre le cylindre de roue 215 et la première extrémité 218 du premier segment 210, un deuxième effort, dit effort d'application Fa s'applique au contact de la garniture 231 avec le tambour, un troisième effort, dit effort de freinage Ff s'applique au point de contact de la seconde extrémité 224 du segment et de la butée 222 et un quatrième effort, dit effort de réaction Fr s'applique également au point de contact de la seconde extrémité 224 du segment et de la butée 222. Le fait que l'effort de freinage Ff et l'effort de réaction Fr s'appliquent en un même point, favorise le phénomène d'enroulement du segment.

La présente invention résout ce problème.

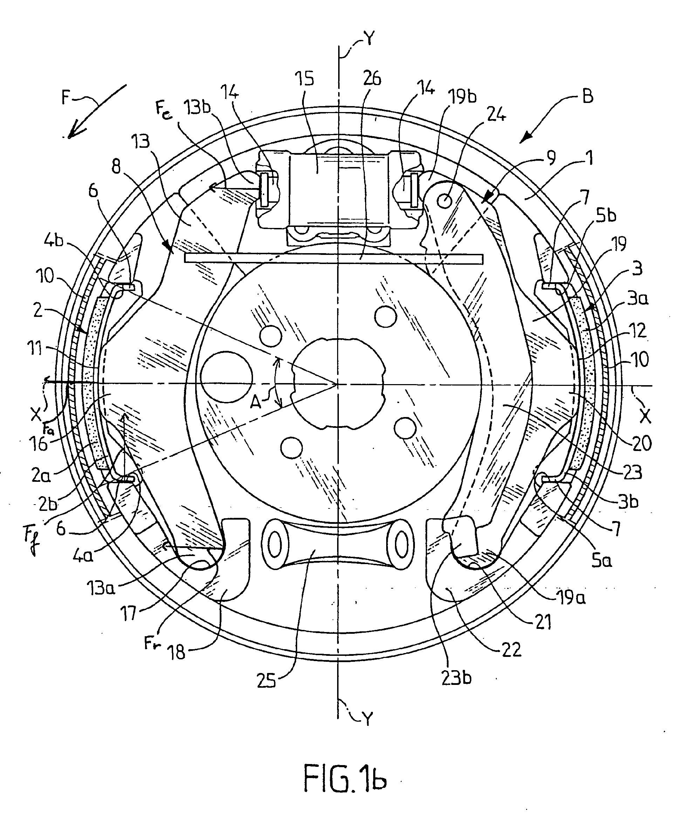

En se reportant à Fig.1b on peut voir un frein à tambour B comportant un plateau 1, prévu pour être fixé à un bras de roue de véhicule. Deux segments 2, 3 opposés suivant une direction diamétrale X-X sont montés coulissants suivant cette direction entre deux parois de guidage respectivement 4a, 4b et 5a, 5b, solidaires du plateau 1.

Chaque segment 2, 3 est muni d'une garniture de friction 2a, 3a fixée par collage, de préférence par surmoulage, sur un support rigide 2b, 3b.

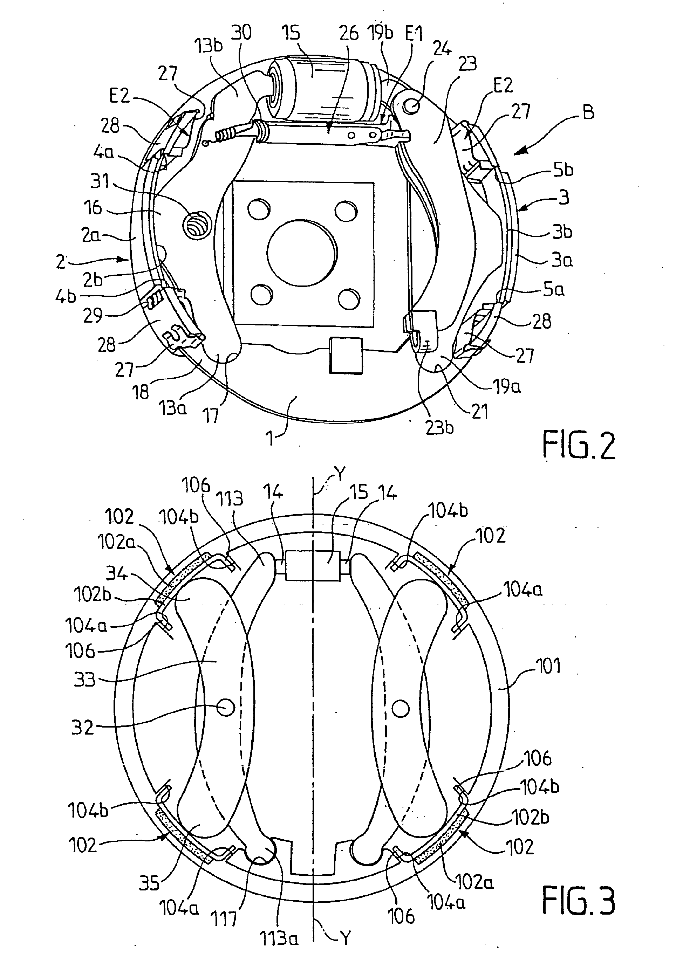

Chaque support 2b, 3b est formé par une plaque métallique. Selon les exemples des Figs. 1 et 2, la plaque support 2b, 3b est cintrée en arc de cercle dont la surface extérieure correspond à une portion de surface cylindrique convexe vers l'extérieur dans le sens radial. Les garnitures 2a, 3a sont fixées sur la surface cylindrique extérieure du support. Les extrémités périphériques des supports 2b, 3b forment des butées 6, 7 propres à s'appuyer dans le sens circonférentiel contre l'une des parois de guidage 4a - 5b tout en conservant une liberté de translation radiale. Les butées 6 et 7 peuvent être constituées par les bords rectilignes des supports 2b, 3b rabattus parallèlement à la direction de coulissement X-X.

L'étendue angulaire A de chaque segment 2, 3 est inférieure à 60° et de préférence inférieure à 50°, cet exemple numérique n'étant pas limitatif. L' étendue angulaire A est inférieure à celle d'un segment de frein à tambour classique, ce qui permet de diminuer considérablement le volume de garniture de friction 2a, 3 a, tout en conservant une durée de vie sensiblement équivalente. Cette diminution de volume de garniture par rapport à un frein à tambour classique peut atteindre 60 %.

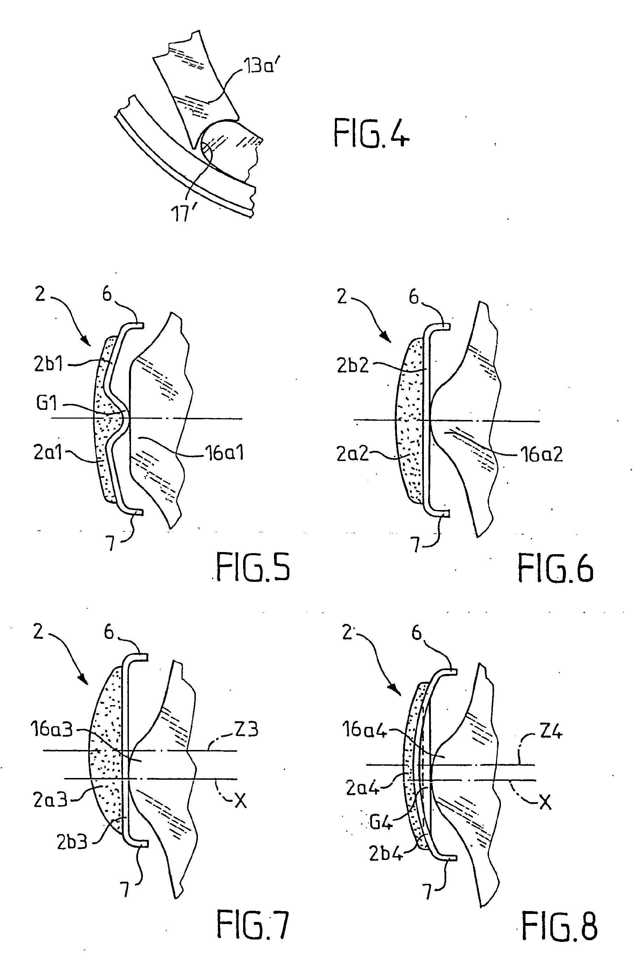

Fig. 5 montre une variante selon laquelle la plaque métallique 2b1 est essentiellement plane avec toutefois, à mi-longueur périphérique, une empreinte, à génératrices perpendiculaires au plan de figure, formant une saillie G1 en V du côté opposé à la garniture 2a1.

Selon Figs.6 et 7, la plaque métallique 2b2, 2b3 est plane. La garniture de friction selon Fig.7 est surmoulée sur la plaque 2b3.

Selon Fig. 8, la plaque métallique 2b4 est cintrée comme sur Fig.1b mais comporte, sensiblement à la moitié de sa dimension perpendiculaire au plan de figure, une empreinte formant une saillie G4 avec surface plane du côté opposé à la garniture de friction 2a4, qui est collée sur la plaque 2b4.

Les parois de guidage 4a-5b, parallèles au diamètre X-X, sont constituées par des faces de blocs solidaires du plateau 1 et faisant saillie perpendiculairement au plan moyen de ce plateau.

La coopération des segments 2 et 3 et des parois de guidage 4a-5b est prévue pour permettre l'extraction ou la mise en place des garnitures entre les parois de guidage par un mouvement de translation suivant une direction orthogonale au plan moyen du plateau 1, c'est-à-dire orthogonale au plan de Fig.1b.

Le frein B comporte un moyen d'application 8, 9 de chaque segment 2, 3 contre un tambour de roue 10, partiellement représenté, qui tourne avec la roue du véhicule, par exemple selon le sens de la flèche F sur Fig.1b.

Le moyen d'application 8, 9 est en appui simple par une zone 11, 12 contre la paroi intérieure du segment 2, 3 pour exercer un effort sensiblement radial.

Le moyen d'application 8 du segment 2 comprend un levier 13 sensiblement en arc de courbe convexe vers l'extérieur dont une extrémité 13a est articulée autour d'un point fixe du plateau 1 et dont l'autre extrémité 13b est en appui contre un piston 14 d'un cylindre de roue 15 monté sur le plateau. Le piston 14 peut exercer un effort de poussée sur l'extrémité 13b sensiblement parallèlement au diamètre X-X.

Le levier 13 est plat, avantageusement découpé dans une plaque métallique. Il comporte, sur son bord radial extérieur, sensiblement à mi-distance des extrémités 13a, 13b, une partie en saillie 16 formant une bosse dont la tranche périphérique constitue la zone d'appui 11.

L'appui 11, 12 du levier 13, 19 contre la face interne du segment est situé environ à mi-distance des extrémités du levier. Le rapport de levier est égal au rapport de la distance entre le point d'application de la force du piston 14 sur le levier et le point d'articulation 13a, à la distance entre l'appui 11, 12 et le point d'articulation 13a . Ce rapport de levier est avantageusement compris entre deux et trois , limites incluses.

Selon l'exemple des Figs. 1 et 6, la saillie 16 ou 16a2 présente un bord convexe extérieur en appui contre le support 2b, 2b2. Selon Fig.5 le bord extérieur de la saillie 16a1 est rectiligne et en appui contre le support 2b1. Selon ces Figs.1, 5 et 6, la disposition est telle que l'axe de l'effort d'entrée et l'axe de l'effort de réaction sont confondus.

Selon Figs.7 et 8, la disposition est telle qu'un décalage existe, d'un côté ou de l'autre, entre l'axe X de l'effort d'entrée et l'axe Z3, Z4 de l'effort de réaction. Selon les cas, un décalage approprié peut procurer une meilleure stabilité et une meilleure usure de garniture ; les performances du frein sont améliorées. Sur Fig. 7 , la saillie 16a3 présente un bord extérieur convexe en appui contre le support plat 2b3. Sur Fig. 8 , la saillie 16a4 est en appui par son bord extérieur convexe contre la surface plane de la saillie G4.

Selon Figs. 1 et 2, l'extrémité 13a est en partie circulaire convexe, logée dans une cavité 17 constituant une surface conjuguée de 13a et prévue dans une saillie 18 du plateau 1. L'extrémité 13a est ainsi articulée en rotation autour d'un axe géométrique perpendiculaire au plateau 1.

Fig.4 montre une variante de réalisation selon laquelle l'extrémité 13a' du levier est concave et la surface conjuguée 17' solidaire du plateau est convexe, en appui contre 13a'.

Le moyen d'application 9 comprend un levier .19 situé, par rapport au levier 13, de l'autre côté d'un axe Y-Y orthogonal à X-X et passant par le centre du plateau 1. L'extrémité supérieure 19b est poussée par un autre piston 14 du cylindre 15. Le bord extérieur du levier 19 est en appui par la tranche d'une bosse 20 contre le segment 3. L'extrémité inférieure 19a en partie circulaire est reçue dans la cavité circulaire 21 d'une saillie 22 du plateau 1. L'appui de la bosse 20 contre le segment peut être assuré selon des variantes conformes aux Figs. 5 à 8.

Un levier 23 de commande de frein à main est articulé sur un axe 24 porté par le levier 19 au voisinage de son extrémité 19b. L'extrémité 23b du levier 23 opposée à l'axe 24 est repliée pour faciliter l'accrochage d'un câble de traction (non représenté) qui passe dans un guide 25 fixé sur le plateau 1.

Une entretoise 26 est prévue entre le levier 13 et les leviers 19 et 23 pour limiter la course de rappel des extrémités 13b, 19b l'une vers l'autre sous l'action d'un premier moyen élastique de rappel E1 (Fig.2) tendu entre des zones voisines de ces extrémités.

Un deuxième moyen élastique de rappel E2 (Fig.2) est prévu pour chaque segment 2, 3. Chaque second moyen élastique E2 comprend, à chaque extrémité circonférentielle du segment 2, 3, une agrafe élastique 27 accrochée à une saillie 28, solidaire du plateau 1 et orthogonale à ce plateau. L'agrafe 27 passe au-dessous de la saillie 28. Les parois de guidage telles que 4a sont prévues sur le bord de la saillie 28 tourné vers le segment 2 ou 3. Chaque paroi de guidage comporte , dans sa partie médiane, une échancrure par laquelle l'agrafe 27 remonte pour venir accrocher, par des dents 29, le bord supérieur du support 2b, 3b et le rappeler radialement vers l'intérieur. Les agrafes 27 permettent d'éviter ou tout au moins de réduire un cliquetis dû à des oscillations ou vibrations des segments 2, 3. Cet exemple de moyen élastique de rappel E2 n'est pas limitatif, d'autres moyens équivalents pouvant être utilisés.

L'entretoise 26 prévue entre le levier 13 et le levier 23 et/ou le levier 19 comporte de préférence un dispositif 30 de rattrapage automatique d'usure des garnitures de friction modifiant la longueur de l'entretoise 26 afin de compenser l'usure des garnitures.

Le maintien des leviers 13, 19 suivant la direction perpendiculaire au plan de Fig.1b. peut être assuré à l'aide de ressorts 31 (Fig.2) d'axe perpendiculaire au plateau 1 et dont une extrémité est liée à ce plateau. Chaque ressort 31 est logé serré dans un trou du levier, et permet un certain débattement du levier. D'autres moyens de maintien équivalents peuvent être prévus pour les leviers.

Le fonctionnement du frein à tambour des Figs.1 et 2 est le suivant. On suppose que le.tambour 10 tourne dans le sens de la flèche F de Fig. 1

Lorsqu'un freinage est commandé, du liquide sous pression est envoyé dans le cylindre 15 entre les pistons 14 qui s'écartent l'un de l'autre en poussant les extrémités 13b, 19b des leviers 13 et 19. Ces leviers pivotent respectivement dans les cavités 17 et 21 et exercent une poussée sensiblement radiale par leur bosse 16, 20 contre le support 2b, 3b du segment associé. Le segment coulisse sensiblement radialement entre les parois de guidage respectives et vient s'appliquer contre la surface interne du tambour 10 pour exercer le freinage.

Une réaction de frottement agissant sur la garniture 2a applique le bord aval, suivant le sens de la flèche F, du support 2b contre la paroi de butée 4a. Le segment 2 est comprimé contre cette butée 4a. Le segment 3 est comprimé contre la butée 5b. Le segment applique alors contre la paroi de guidage 4a, un effort de freinage Ff selon le sens de la flèche Ff.

Un effort de réaction Fr s'applique alors selon la flèche Fr sur l'extrémité 13a du segment en contact de la butée 18.

Par conséquent, l'effort de freinage Ff et l'effort de réaction Fr s'appliquent en deux points distincts augmentant de manière importante la stabilité du couple de freinage.

Par effet de levier, l'effort appliqué par le piston 14 à l'extrémité correspondante 13b ou 19b est multiplié sensiblement par deux au niveau de la bosse 16, 20 et du segment 2, 3.

Le travail des deux segments 2, 3 en compression permet de diminuer le volume de garniture de friction par rapport à un frein à tambour classique dans lequel l'un des segments est comprimé et l'autre est tiré ou tendu. Les efforts sont mieux répartis sur le plateau 1 et la stabilité du couple de freinage est améliorée.

La fabrication est simplifiée par rapport à un segment classique dans lequel le support 2b, 3b de la garniture de friction est soudé à la partie formant levier 13, 19. Selon l'invention cette soudure est supprimée, la paroi 2b, 3b étant libre par rapport au levier 13, 19 en appui simple.

Le montage des leviers plats 13, 19 est facilité avec l'articulation 13a, 17 ou 19a, 22. Le remplacement des segments 2, 3 lorsque les garnitures 2a, 3a sont usées s'effectue aisément. Après démontage du tambour pour dégager le plateau 1, on peut extraire les segments usés par une translation suivant une direction perpendiculaire au plan de Fig.1b. entre les parois 4a, 4b et 5a, 5b et remettre en place des segments neufs. La longueur de l'entretoise réglable 26 est ajustée pour tenir compte de l'augmentation d'épaisseur de la garniture de friction lors du remplacement.

Le frein à main peut être actionné en exerçant une traction sur l'extrémité inférieure 23b du levier 23, de la droite vers la gauche de Fig.1b., par un câble non représenté. Le levier 23 tourne dans le sens d'horloge, selon Fig.1b., autour de l'axe 24 et, par l'entretoise 26, pousse le levier 13 qui applique le segment 2 contre le tambour 10. Le levier 23 pivote contre l'entretoise 26 par réaction, et repousse l'axe 24 et le levier 19 vers la droite de Fig.1b.. Ceci provoque l'application du segment 3 contre le tambour 10.

En se reportant à Fig.3, on peut voir une représentation schématique partielle d'une variante de réalisation. Les éléments identiques ou jouant des rôles semblables à des éléments déjà décrits à propos des figures précédentes sont désignés par les mêmes références numériques, éventuellement augmentées de 100, et leur description ne sera pas reprise.

Le levier 113 comporte, dans sa partie centrale, un axe d'articulation 32 pour un palonnier plat incurvé 33, dont la concavité est tournée vers l'extérieur. Chacune des deux extrémités 34, 35 du palonnier a une forme convexe arrondie et est en appui contre la face interne d'un segment 102 monté coulissant, dans le sens radial, entre des parois 104a, 104b solidaires du plateau 101. Les deux extrémités 34, 35 du palonnier 33, de même que les segments 102 associés, sont situés d'un même côté du diamètre Y-Y du plateau 101 passant par le milieu du cylindre 15.

Le levier 113, lorsque son extrémité supérieure 113b est poussée par le piston 14, commande par l'intermédiaire du palonnier 33 les deux segments 102.

Un autre levier, un autre palonnier et deux autres segments symétriques par rapport à l'axe Y-Y sont généralement prévus. Le frein à tambour comporte alors quatre segments 102 symétriques deux à deux par rapport à l'axe Y-Y.

Quelle que soit la variante de réalisation, l'amélioration de la stabilité du couple de freinage peut être renforcée par pilotage et modulation de la pression du fluide du circuit de freinage.

L'assemblage des garnitures de friction sur les supports ne fait pas intervenir de rivetage ou de sertissage.

Le cas échéant, le point d'articulation inférieur tel que 13a-17 des leviers pourrait être supprimé avec mise en place d'un autre cylindre de roue semblable au cylindre 15 entre les deux extrémités inférieures des leviers.

## Revendications

1. Frein à tambour comportant un plateau (1,101) sur lequel est monté au moins un segment (2,3; 102) muni d'une garniture de friction, un moyen d'application (8,9;33) du segment contre un tambour (10) de roue en réponse à une commande de freinage, et des moyens élastiques de rappel du segment pour l'écarter du tambour lorsque le freinage cesse, le segment (2,3;102) étant monté coulissant suivant une direction essentiellement radiale entre deux parois de guidage (4a,4b;5a,5b;104a,104b) solidaires du plateau, le moyen d'application (8,9;33) du segment étant en appui contre la paroi intérieure du segment, pour exercer un effort sensiblement radial, le moyen d'application du segment comporte un levier
**caractérisé en ce que** l'articulation du levier (13, 19) comporte sur le plateau une surface (17, 21;17") conjuguée d'une extrémité (13a, 19a ; 13a') du levier pour la guider.

2. Frein à tambour selon la revendication 1, **caractérisé par le fait qu'**il comporte deux segments (2,3;102) opposés suivant une direction diamétrale, montés coulissants suivant une direction essentiellement radiale entre deux parois de guidage (4a,4b;5a,5b; 104a, 104b) et un moyen d'application (8,9;33) pour chaque segment contre le tambour (10) de roue en réponse à une commande de freinage, le moyen d'application étant en appui contre la paroi intérieure du segment.

3. Frein à tambour selon la revendication 1 ou 2, **caractérisé par le fait que** l'étendue angulaire de chaque segment (2,3,102) est inférieure à 60°.

4. Frein à tambour selon l'une des revendications précédentes, **caractérisé par le fait que** chaque segment (2,3;102) comprend un support rigide (2b, 3b; 2b1; 2b2; 2b3; 2b4; 102b), et une garniture de friction (2a, 3a; 2a1, 2a2; 2a3; 2a4; 102a) fixée sur la surface extérieure du support.

5. Frein à tambour selon la revendication 4, **caractérisé par le fait que** les extrémités du support rigide (2b, 3b; 2b1; 2b2; 2b3; 2b4; 102b), forment des butées (6,7;106) propres à s'appuyer dans le sens circonférentiel contre une paroi de guidage correspondante (4a,4b;5a,5b; 104a, 104b).

6. Frein à tambour selon l'une des revendications précédentes, **caractérisé par le fait qu'**il est prévu pour que l'axe de l'effort de réaction (Z3, Z4) soit décalé par rapport à l'axe de l'effort d'entrée (X).

7. Frein à tambour selon l'une des revendications précédentes, **caractérisé par le fait que** le levier est plat (13, 19), en arc de courbe convexe vers l'extérieur, dont une extrémité (13a,19a) est articulée sur un point fixe du plateau et dont l'autre extrémité (13b,19b) est soumise à un effort de poussée, exercé par un piston (14) de cylindre de roue, dans un sens propre à appliquer le segment contre le tambour, le levier venant en appui par son bord radial extérieur (11,12) contre la paroi interne du segment correspondant.

8. Frein à tambour selon la revendication 7, **caractérisé par le fait que** le levier (13, 19) comporte sur son bord extérieur une partie en saillie (16, 20; 16a1, 16a2; 16a3; 16a4) formant une bosse qui vient en appui contre la paroi interne du segment correspondant.

9. Frein à tambour selon la revendication 7 ou 8, **caractérisé par le fait que** l'appui (11, 12) du levier (13, 19) contre la face interne du segment est situé environ à mi-distance des extrémités du levier.

10. Frein à tambour selon la revendication 9, **caractérisé par le fait que** le rapport de levier est compris entre 2 et 3, limites incluses.

11. Frein à tambour selon l'une des revendications précédentes, **caractérisé par le fait que** les moyens élastiques de rappel comprennent un premier moyen élastique de rappel (E1) du levier (13,19) et un deuxième moyen élastique de rappel (E2) du segment (2,3).

12. Frein à tambour selon la revendication 11, **caractérisé par le fait que** le deuxième moyen élastique de rappel (E2) du segment comprend, à chaque extrémité circonférentielle du segment, une agrafe élastique (27) accrochée au plateau (1,28) et propre à exercer un rappel du segment dans le sens radial vers l'intérieur.

13. Frein à tambour selon l'une des revendications 1 à 6, **caractérisé par le fait qu'**il comporte un levier (113) dont la partie centrale est munie d'une articulation (32) pour un palonnier (33) en arc de courbe concave vers l'extérieur, chacune des deux extrémités du palonnier étant en appui contre la face interne d'un segment (102).

14. Frein à tambour **selon l'une quelconque des revendications précédentes** comportant un plateau (1, 101) sur lequel est monté au moins un segment (2, 3, 102) muni d'une garniture de friction, un levier d'application (8, 9, 33) du segment contre un tambour (10) de roue en réponse à une commande de freinage, et des moyens élastiques de rappel du segment pour l'écarter du tambour lorsque le freinage cesse, **caractérisé par le fait que** lors d'une application de freinage un effort de réaction (Fr) s'applique au levier d'application et un effort de freinage (Ff) s'applique au segment de manière à ce que lesdits efforts de freinage (Ff) et de réaction (Fr) s'appliquent en deux points différents.

## Claims

1. A drum brake including a plate (1, 101) on which at least one shoe (2, 3; 102) provided with a friction lining is mounted, application means (8, 9; 33) for applying the shoe against a wheel drum (10) in response to a braking command, and resilient return means for spacing it apart from the drum when braking ceases, the shoe (2, 3; 102) being mounted to slide along an essentially radial axis between two guide walls (4a, 4b; 5a, 5b; 104a, 104b) secured to the plate, the application means (8, 9; 33) for applying the shoe bearing against the inside wall of the shoe, for exerting a substantially radial force, the application means for applying the shoe comprise a lever, the hinge of the lever (13, 19) comprises, on the plate (17, 21; 17"), a surface that is complementary with an end (13a, 19a; 13a') of the lever for guiding it.

2. A drum brake according to claim 1, **characterized by** the fact that it includes two shoes (2, 3; 102) opposite from each other along a diametral axis, and mounted to slide along an essentially radial axis between respective pairs of guide walls (4a, 4b; 5a, 5b; 104a, 104b), and application means (8, 9; 33) for applying each shoe against the wheel drum (10) in response to a braking command, the application means bearing against the inside wall of the shoe.

3. A drum brake according to claim 1 or claim 2, **characterized by** the fact that the angle through which each shoe (2, 3, 102) extends is less than 60°.

4. A drum brake according to any preceding claim, **characterized by** that the fact that each shoe (2, 3; 102) comprises a rigid support (2b, 3b; 2b1; 2b2; 2b3; 2b4; 102b), and a friction lining (2a, 3a; 2a1, 2a2; 2a3; 2a4; 102a) fixed to the outside surface of the support.

5. A drum brake according to claim 4, **characterized by** the fact that the ends of the rigid support (2b, 3b; 2b1; 2b2; 2b3; 2b4; 102b) form abutments (6, 7; 106) suitable for bearing circumferentially against a corresponding guide wall (4a, 4b; 5a, 5b; 104a, 104b).

6. A drum brake according to any preceding claim, **characterized by** the fact that it is organized so that the axis of the reaction force (Z3, Z4) is offset relative to the axis of the inlet force (X).

7. A drum brake according to any preceding claim, **characterized by** the fact that the lever is flat (13, 19), is in the shape of an outwardly convex arc of a curve, and has one of its ends (13a, 19a) hinged to a fixed point of the plate and its other end (13b, 19b) subjected to a thrust force exerted by a wheel cylinder piston (14) in a direction suitable for applying the shoe against the drum, the lever coming to bear via its radially outermost edge (11, 12) against the inside wall of the corresponding shoe.

8. A drum brake according to claim 7, **characterized by** the fact that, at its outside edge, the lever (13, 19) is provided with a projecting portion (16, 20; 16a1; 16a2; 16a3; 16a4) forming a hump that comes to bear against the inside wall of the corresponding shoe.

9. A drum brake according to claim 7 or claim 8,
**characterized by** the fact that the zone (11, 12) at which the lever (13, 19) bears against the inside face of the shoe is situated about half-way between the ends of the lever.

10. A drum brake according to claim 9, **characterized by** the fact that the leverage ratio lies in the range 2 to 3.

11. A drum brake according to any preceding claim, **characterized by** the fact that the resilient return means comprise first resilient return means (E1) for returning the lever (13, 19) and second resilient return means (E2) for returning the shoe (2, 3).

12. A drum brake according to claim 11, **characterized by** the fact that the second resilient return means (E2) for returning the shoe comprise, at each circumferential end of the shoe, a spring clip (27) engaging the plate (1, 28) and suitable for exerting a return force for returning the shoe radially inwards.

13. A brake drum according to any one of claims 1 to 6, **characterized by** the fact that it further comprises a lever (113) whose central portion is provided with a hinge (32) for a control bar (33) in the shape of an outwardly concave arc of a curve, each of the two ends of the control bar bearing against the inside face of a respective shoe (102).

14. A drum brake according to any one of the preceding claims including a plate (1, 101) on which at least one shoe (2, 3, 102) provided with a friction lining is mounted, an application lever (8, 9, 33) for applying the shoe against a wheel drum (10) in response to a braking command, and resilient return means for spacing the shoe apart from the drum when braking ceases, said drum brake being **characterized by** the fact that, when the brakes are applied, a reaction force (Fr) is applied to the application lever and a braking force (Ff) is applied to the shoe so that said braking force (Ff) and said reaction force (Fr) are applied at two different points.

## Patentansprüche

1. Trommelbremse mit einer Platte (1, 101), an der mindestens ein mit einem Reibbelag versehenes Segment (2, 3; 102) angebracht ist, mit einem Mittel (8, 9; 33) zum Andrücken des Segments gegen eine Radtrommel (10) in Reaktion auf eine Bremsbetätigung und mit elastischen Mitteln zum Zurückstellen des Segments, um dieses von der Trommel wegzurücken, wenn nicht mehr gebremst wird, wobei das Segment (2, 3; 102) gemäß einer im Wesentlichen radialen Richtung zwischen zwei mit der Platte fest verbundenen Führungswänden (4a, 4b; 5a, 5b; 104a, 104b) gleitend angebracht ist, das Mittel (8, 9; 33) zum Andrücken des Segments an der Innenwand des Segments anliegt, um eine im Wesentlichen radiale Kraft auszuüben, und das Mittel zum Andrücken des Segments einen Hebel aufweist, **dadurch gekennzeichnet, dass** das Gelenk des Hebels (13, 19) auf der Platte eine Gegenfläche (17, 21; 17") eines Endes (13a, 19a; 13') des Hebels zu dessen Führung aufweist.

2. Trommelbremse nach Anspruch 1, **dadurch gekennzeichnet, dass** sie zwei in diametraler Richtung entgegengesetzte Segmente (2, 3; 102), die gemäß einer im Wesentlichen radialen Richtung zwischen zwei Führungswänden (4a, 4b; 5a, 5b; 104a, 104b) gleitend angebracht sind, und für jedes Segment ein Mittel (8, 9; 33) zum Andrücken gegen die Radtrommel (10) in Reaktion auf eine Bremsbetätigung aufweist, wobei das Andrückmittel an der Innenwand des Segments anliegt.

3. Trommelbremse nach Anspruch 1 oder 2, **dadurch gekennzeichnet, dass** die Winkelfläche jedes Segments (2, 3; 102) weniger als 60° beträgt.

4. Trommelbremse nach einem der vorhergehenden Ansprüche, **dadurch gekennzeichnet, dass** jedes Segment (2, 3; 102) eine starre Halterung (2b, 3b; 2b1; 2b2; 2b3; 2b4; 102b) und einen an der Außenfläche der Halterung befestigten Reibbelag (2a, 3a; 2a1, 2a2; 2a3; 2a4; 102a) aufweist.

5. Trommelbremse nach Anspruch 4, **dadurch gekennzeichnet, dass** die Enden der starren Halterung (2b, 3b; 2b1; 2b2; 2b3; 2b4; 102b) Anschläge (6, 7; 106) bilden, die dazu geeignet sind, in Umfangsrichtung gegen eine entsprechende Führungswand (4a, 4b; 5a, 5b; 104a, 104b) gedrückt zu werden.

6. Trommelbremse nach einem der vorhergehenden Ansprüche, **dadurch gekennzeichnet, dass** sie so vorgesehen ist, dass die Achse (Z3, Z4) der Reaktionskraft zur Achse (X) der Eingangskraft versetzt ist.

7. Trommelbremse nach einem der vorhergehenden Ansprüche, **dadurch gekennzeichnet, dass** der Hebel (13, 19) flach und nach außen konvex bogenförmig ist, wobei ein Ende (13a, 19a) des Hebels an einer festen Stelle der Platte gelenkig angebracht ist und das andere Ende (13b, 19b) einer Druckkraft ausgesetzt ist, die von einem Radzylinderkolben (14) in eine Richtung ausgeübt wird, in die das Segment gegen die Trommel gedrückt wird, wobei der Hebel mit seinem radialen Außenrand (11, 12) an die Innenwand des entsprechenden Segments in Anlage gelangt.

8. Trommelbremse nach Anspruch 7, **dadurch gekennzeichnet, dass** der Hebel (13, 19) an seinem Außenrand einen hervorstehenden Abschnitt (16, 20; 16a1; 16a2; 16a3; 16a4) aufweist, der eine Erhebung bildet, die an die Innenwand des entsprechenden Segments in Anlage gelangt.

9. Trommelbremse nach Anspruch 7 oder 8, **dadurch gekennzeichnet, dass** sich die Abstützung (11, 12) des Hebels (13, 19) an der Innenfläche des Segments etwa auf halber Entfernung zwischen den Enden des Hebels befindet.

10. Trommelbremse nach Anspruch 9, **dadurch gekennzeichnet, dass** das Hebelverhältnis zwischen 2 und 3, einschließlich Grenzwerte, beträgt.

11. Trommelbremse nach einem der vorhergehenden Ansprüche, **dadurch gekennzeichnet, dass** die elastischen Rückstellmittel ein erstes elastisches Mittel (E1) zum Zurückstellen des Hebels (13, 19) und ein zweites elastisches Mittel (E2) zum Zurückstellen des Segments (2, 3) umfassen.

12. Trommelbremse nach Anspruch 11, **dadurch gekennzeichnet, dass** das zweite elastische Mittel (E2) zum Zurückstellen des Segments an jedem in Umfangsrichtung liegenden Ende des Segments eine elastische Klammer (27) aufweist, die an der Platte (1, 28) befestigt und dazu geeignet ist, das Segment radial nach innen zurückzustellen.

13. Trommelbremse nach einem der Ansprüche 1 bis 6, **dadurch gekennzeichnet, dass** sie einen Hebel (113) aufweist, dessen mittlerer Teil mit einem Gelenk (32) für einen nach außen konkav bogenförmigen Ausgleichshebel (33) versehen ist, wobei beide Enden des Ausgleichshebels an der Innenfläche eines Segments (102) anliegen.

14. Trommelbremse nach einem der vorhergehenden Ansprüche, mit einer Platte (1, 101), an der mindestens ein mit einem Reibbelag versehenes Segment (2, 3, 102) angebracht ist, mit einem Hebel (8, 9, 33) zum Andrücken des Segments gegen eine Radtrommel (10) in Reaktion auf eine Bremsbetätigung und mit elastischen Mitteln zum Zurückstellen des Segments, um dieses von der Trommel wegzurücken, wenn nicht mehr gebremst wird, **dadurch gekennzeichnet, dass** bei einer Bremsbetätigung eine Reaktionskraft (Fr) auf den Andrückhebel und eine Bremskraft (Ff) auf das Segment aufgebracht werden, so dass die Bremskraft (Ff) und die Reaktionskraft (Fr) an zwei unterschiedlichen Stellen aufgebracht werden.
